Europäisches Patentamt

European Patent Office

Office européen des brevets

(11) Veröffentlichungsnummer: **0 320 773 B1**

## EUROPÄISCHE PATENTSCHRIFT

(45) Veröffentlichungstag der Patentschrift: **26.01.94**

(51) Int. Cl.⁵: **C21D 8/02**, B23K 20/08, B32B 15/01

(21) Anmeldenummer: **88120439.0**

(22) Anmeldetag: **07.12.88**

(54) **Verfahren zur Herstellung von plattiertem Warmband.**

(30) Priorität: **16.12.87 DE 3742539**

(43) Veröffentlichungstag der Anmeldung:
**21.06.89 Patentblatt 89/25**

(45) Bekanntmachung des Hinweises auf die
Patenterteilung:
**26.01.94 Patentblatt 94/04**

(84) Benannte Vertragsstaaten:
**AT BE DE ES FR GB IT LU NL SE**

(56) Entgegenhaltungen:
**DE-B- 1 237 787**
**US-A- 3 489 618**
**US-A- 4 178 417**
**US-A- 4 736 884**

**STAHL U. EISEN, Nr. 12, 1982, Seiten 619-624;
H. PIRCHER et al.: "Plattiertes Grobblech in
der Energietechnik - Eigenschaften und Anwendungen"**

(73) Patentinhaber: **Thyssen Stahl Aktiengesellschaft
Kaiser-Wilhelm-Strasse 100
D-47166 Duisburg(DE)**

(72) Erfinder: **Pircher, Hans, Dr. Ing.
Elsenbornerweg 38
D-4330 Mülheim(DE)**
Erfinder: **Kawalla, Rudolf, Dipl.-Ing.
Schwarzwaldstrasse 18
D-4200 Oberhausen 12(DE)**
Erfinder: **Sussek, Gerd, Dr. Ing.
Stockweg 94
D-4330 Mülheim/Ruhr(DE)**
Erfinder: **Wilms, Walter, Dipl.-Ing.
Herrenwiese 18
D-4100 Duisburg 11(DE)**
Erfinder: **Wolpert, Waldemar, Dipl.-Ing.
Heisterbusch 79
D-4220 Dinslaken(DE)**

(74) Vertreter: **Cohausz & Florack Patentanwälte
Postfach 33 02 29
D-40435 Düsseldorf (DE)**

**Beschreibung**

Die Erfindung betrifft ein Verfahren zur Herstellung von plattiertem Warmband, bei dem eine Stahlbramme (Grundwerkstoff) mit einer Auflage aus einem korrosionsbeständigen Werkstoff (Auflagewerkstoff) versehen und der Verbundkörper warmgewalzt wird.

Ein derartiges Verfahren ist aus der deutschen Patentschrift DE-C-17 52 496 bekannt; bei diesem Verfahren wird jedoch die Verbindung von Grund- und Auflagewerkstoff und die Erzeugung des Warmbandes in einem Herstellungsschritt vorgenommen, und zwar beim Walzvorgang. Zu diesem Zweck findet der Walzvorgang in einem Planetenwalzwerk statt, in welchem isothermisch die Stärke des aus Grund- und Auflagewerkstoff bestehenden Plattenpaketes in einem Stich (Durchlauf) um über 80 % auf Bandstärke verringert wird.

Das Plattenpaket besteht aus zwei äußeren, den Grundwerkstoff bildenden Platten, beispielsweise aus unlegiertem Stahl oder Flußstahl. Zwischen diesen Platten liegen zwei verhältnismäßig dünne Platten, beispielsweise aus chromenthaltendem Stahl als Auflagewerkstoff, wobei diese Platten voneinander durch eine dünne, gleichmäßige Schicht eines Schweißtrennmittels getrennt sind. Dieses so ausgebildete Plattenpaket wird in einer nicht oxidierenden Atmosphäre in einem Brammenofen auf eine Warmwalztemperatur von beispielsweise 950 - 1.050 °C erhitzt und dann über Förderrollen in das Planetenwalzwerk eingeführt. Um die Handhabung des Plattenpaketes zu erleichtern und eine Trennung der Platten zu verhindern, können die äußeren Platten an den Kanten verschweißt sein. Das aus dem Planetenwalzwerk austretende Band kann durch Abschneiden der Kanten in zwei einzelne Verbundmetallbänder je aus dem Grundwerkstoff und dem Auflagewerkstoff aus rostfreiem Stahl getrennt werden.

Die außenliegenden Grundwerkstoffschichten des Verbundmetallbandes können mit einem Beschichtungsmetall, wie Zinn, Zink, Cadmium, Aluminium oder anderen Legierungen, versehen werden. Ferner kann das Verbundmetallband nach einer anderen Verfahrensweise einer Kaltwalzbehandlung unterzogen werden.

Bei diesem bekannten Verfahren zur Herstellung von plattiertem Warmband ist nachteilig,
- daß es besondere, speziell auf das Plattierungswalzen abgestimmte Walzstraßen erfordert,
- daß es das Auswalzen von Doppelpaketen voraussetzt und dabei aufgrund der Trennschicht Einschränkungen im Gesamtumformgrad beinhaltet,
- daß wegen der vergleichsweise geringen Walzgeschwindigkeiten des Planetenwalzwerkes (max. 2,4 m/s) die Bandtemperatur über die Bandlänge abnimmt,
- daß das Eigenschaftsprofil des Bandmaterials erst in einem getrennten Wärmebehandlungsprozeß eingestellt werden muß,
- daß es durch den Wärmebehandlungsprozeß zur Einstellung der mechanischen und korrosionschemischen Eigenschaften zu Aufkohlungsreaktionen in der Bindungszone zwischen Grund- und Auflagewerkstoff kommt.

Bei der Herstellung von plattiertem Grobblech ist es bekannt, den Grundwerkstoff aus Feinkornbaustählen und den Auflagewerkstoff aus korrosionsbeständigen Werkstoffen durch einen Sprengplattierungsvorgang miteinander zu verbinden und den entstandenen Verbundkörper anschließend in einem Grobblechwalzwerk auszuwalzen ("Bänder, Bleche, Rohre", 11, 1982, Seite 324 bis 328 und "Stahl und Eisen", 102, 1982, Nr. 12, Seite 619 bis 624, deutsche Auslegeschrift 12 37 787, "Nippon Kokan Technical Report Overseas", No. 49, 1987, Seite 10 bis 18 sowie US-A-4 178 417).

Bei der Herstellung von plattiertem Grobblech ist es jedoch erforderlich, zur Einstellung der mechanisch-technologischen Eigenschaften des Grundwerkstoffes und zur Verbesserung der Korrosionseigenschaften des Auflagewerkstoffes dem Warmwalzen eine Wärmebehandlung des plattierten Grobbleches nachzuschalten. Hierbei diffundiert Kohlenstoff aus dem Grundwerkstoff in den Auflagewerkstoff. In den aufgekohlten Bereichen des Auflagewerkstoffes führt eine Karbidbildung zu einer Beeinträchtigung der Korrosionsbeständigkeit des Auflagewerkstoffes.

In zunehmendem Maße werden jedoch plattierte Werkstoffe in Form von Band benötigt, beispielsweise für die Herstellung von plattierten Rohren, insbesondere von Sauergasrohren, oder als Halbzeug für die Kaltbandfertigung.

Der Einsatz von plattierten Grobblechen für diese Anwendungsfälle ist nachteilig, weil Einzelbleche nicht für moderne Kontistraßen zur Rohrfertigung verwendbar sind, beispielsweise für Rohrschweißanlagen mit Hochfrequenzinduktion und für Spiralrohrschweißanlagen; Einzelbleche sind auch als Halbzeug für die Kaltbandfertigung ungeeignet.

Der Erfindung liegt daher die Aufgabe zugrunde, ein Verfahren der eingangs genannten Art zu schaffen, nach welchem das plattierte Warmband im Walzzustand ausgezeichnete

Festigkeits- und Zähigkeitseigenschaften besitzt und nach welchem eine nachträgliche Wärmebehandlung des Warmbandes zur Verbesserung der Korrosionsbeständigkeit der Plattierungsauflage nicht erforderlich ist.

Erfindungsgemäß wird diese Aufgabe durch die kennzeichnenden Maßnahmen des Anspruches 1 gelöst. Bevorzugte Ausführungsformen des in Anspruch 1 beanspruchten Verfahrens sind in den abhängigen Ansprüchen 2 bis 11 enthalten.

Bevorzugt werden als Stahlbramme ein niedriglegierter Stahl (Grundwerkstoff) mit einem Kohlenstoffgehalt bis 0,25 Gew.-% und als Auflagewerkstoff nichtrostende, insbesondere nichtrostende austenitische, Stähle oder Knetlegierungen auf Nickelbasis eingesetzt.

Mit Vorteil wird der auf Walztemperatur erhitzte Verbundkörper in der Warmbandstraße mit einer Stichabnahme von phi > 0,10 bis auf ein Viertel der Ausgangsdicke vorgewalzt und anschließend auf die Warmband-Enddicke fertiggewalzt und die Abkühlung des plattierten Warmbandes mit einer Abkühlgeschwindigkeit im Kern von ≧ 8 °C/s durchgeführt auf eine Abkühltemperatur von < 650 °C.

Die Stichabnahme phi ist definiert als

$$\varphi = \ln \frac{h_{n-1}}{h_n}$$

mit $h_n$ = Walzgutdicke nach dem n-ten Stich und $h_{n-1}$ = Walzgutdicke nach dem n-1-ten Stich.

Im Vergleich zu dem vorbekannten Verfahren zur Herstellung von plattiertem Warmband ist dabei erfindungswesentlich, daß der Grundwerkstoff und der Auflagewerkstoff durch Sprengplattieren miteinander verbunden werden und der erzeugte Verbundkörper nicht in einem Planetenwalzwerk, sondern in einer Warmwalzstraße mit hoher Stichabnahme, vorzugsweise mit der angegebenen Stichabnahme von phi > 0,10 bis auf ein Viertel der Ausgangsdicke vorgewalzt und anschließend zu Warmband fertiggewalzt wird.

Ferner ist erfindungswesentlich, daß das erzeugte Warmband unmittelbar anschließend, d. h. in einem Arbeitsgang, einer raschen Kühlung, vorzugsweise mit der Abkühlgeschwindigkeit im Kern von ≧ 8 C/s unterzogen wird. Nach der Abkühlung auf unter 650 °C und der Haspelung des plattierten Warmbandes sowie der Abkühlung an Luft auf Raumtemperatur kann das plattierte Warmband ohne weitere Behandlungsschritte für unterschiedliche Anwendungsfälle eingesetzt werden, insbesondere zur Herstellung von Rohren und als Halbzeug für die Kaltbandfertigung.

Den mit Vorteil eingesetzten Walz- und Abkühlbedingungen kommt dabei besondere Bedeutung zu. So trägt das Vorwalzen des Verbundkörpers mit hoher Stichabnahme von phi > 0,10 bis auf ein Viertel der Ausgangsdicke dazu bei, daß eine rasche und vollständige Rekristallisation des Auflagewerkstoffes während der ersten Stiche eingeleitet wird. Die Rekristallisation während des Vorwalzens bewirkt auflagenseitig ein gleichmäßiges und feinkörniges Gefüge. In der Fertigstaffel, in der aufgrund niedrigerer Temperaturen nur erschwert Rekristallisationsvorgänge im Auflagewerkstoff ablaufen können, wird die Gefahr von Aufreißungen dadurch vermieden.

Durch die erfindungsgemäße Maßnahme der Abkühlung des plattierten Warmbandes mit der Abkühlgeschwindigkeit im Kern von ≧ 8 °C/s werden während des Abkühlens des gewalzten Bandes auflagenseitig Ausscheidungen verhindert, die sich durch Minderung der Korrosionsresistenz negativ auf die Gebrauchsfähigkeit des plattierten Warmbandes auswirken. Außerdem können die Festigkeitsmerkmale des Grundwerkstoffes vorteilhaft beeinflußt werden. Eine Kohlenstoffdiffusion vom Grundwerkstoff in den Auflagewerkstoff und damit eine nachteilige Karbidbildung wird zudem weitgehend ausgeschlossen.

Die Erhitzung des Verbundkörpers vor dem Warmwalzen in der Warmbandstraße liegt bevorzugt im Bereich von 1.200 bis 1.280 °C, während der bevorzugte Bereich der Endwalztemperatur bei über 900 °C, insbesondere bei 950 bis 1.100 °C, liegt. Das plattierte Walzgut ist damit zu Beginn der Walzphase auflagenseitig frei von störenden Ausscheidungen. Außerdem kann durch beide Maßnahmen das Umformvermögen günstig beeinflußt werden, so daß Kanten- und Oberflächenaufreißungen des Auflagewerkstoffes verhindert werden können. Ferner werden durch die hohe Endwalztemperatur Ausscheidungen verhindert, die den Korrosionswiderstand des plattierten Bandes beeinträchtigen könnten.

In weiterer Ausgestaltung der Erfindung wird die Kühlung des plattierten Warmbandes nach dem Austritt aus der Fertigstaffel mit flüssigen und/oder gasförmigen Kühlmedien, wie Wasser bzw. Wasser-Luft-Gemischen, durchgeführt mit einer Abkühlgeschwindigkeit im Kern von 10 bis 55 °C/s. Hierdurch werden während der Abkühlphase des gewalzten Bandes ungünstige Ausscheidungen in der Auflage vermieden und grundwerkstoffseitig Feinkorngefüge mit vorteilhaften Verarbeitungs- und Gebrauchseigenschaften erzielt.

Die Temperatur auf die das plattierte Warmband abgekühlt wird, liegt mit Vorteil im Bereich von 650 bis 500 °C. Diese Maßnahme trägt dazu bei, daß das plattierte Warmband nach dem Haspeln und der Abkühlung auf Raumtemperatur ohne nachträgliches Lösungsglühen eingesetzt werden kann.

Bei Verwendung einer Warmbandstraße mit reversierendem Vorgerüst wird mit Vorteil im wesentlichen ohne Haltezeiten zwischen den Reversierschritten gewalzt, um die Abkühlung des Verbundkörpers während des Vorwalzens möglichst gering zu halten und damit wie oben bereits dargelegt, die rasche und vollständige Rekristallisation im Auflagewerkstoff zu begünstigen.

Als Grundwerkstoff wird bevorzugt ein Stahl verwendet, mit

0,02 - 0,25 % Kohlenstoff

bis 2,5 % Mangan

bis 0,06 % Aluminium

bis 0,8 % Silizium

Rest Eisen und unvermeidbare Verunreinigungen.

Es hat sich herausgestellt, daß ein solcher Stahl sich trotz der hohen Endwalztemperaturen zur Herstellung von plattiertem Warmband mit guten Eigenschaften eignet. Zudem kann dieser Stahl mit eingeführten Techniken problemlos thermisch geschnitten und geschweißt werden.

Der als Grundwerkstoff verwendete Stahl enthält mit Vorteil zusätzlich noch

bis 0,1 % Niob

bis 0,25 % Titan

bis 0,7 % Molybdän

bis 1,0 % Chrom

bis 1,0 % Nickel

bis 0,5 % Kupfer

bis 0,15 % Vanadium

einzeln oder nebeneinander.

Durch diese Zusätze können weitere Verbesserungen der Verarbeitungs- und Gebrauchseigenschaften erreicht werden.

Als Auflagewerkstoff wird bevorzugt ein austenitischer nichtrostender Stahl verwendet, mit

max. 0,1 % Kohlenstoff

max. 4 % Mangan

max. 4 % Silizium

max. 35 % Nickel

10 - 30 % Chrom

max. 7 % Molybdän

Rest Eisen und unvermeidbare Verunreinigungen.

Die Begrenzung des Kohlenstoffgehaltes wird genutzt, um die Ausscheidungsneigung der Auflage zu reduzieren.

Weiterhin hat sich als vorteilhaft herausgestellt, wenn der als Auflagewerkstoff verwendete austenitische nichtrostende Stahl zusätzlich noch

max. 1,5 % Titan

max. 1,5 % Niob

max. 5 % Kupfer

max. 0,5 % Aluminium

max. 0,5 % Stickstoff

einzeln oder nebeneinander enthält.

Als Auflagewerkstoff kann jedoch mit Vorteil auch eine Knetlegierung auf Nickel-Basis verwendet werden, mit

max. 0,1 % Kohlenstoff

max. 4 % Mangan

max. 4 % Silizium

max. 45 % Eisen

10 - 30 % Chrom

max. 10 % Molybdän

Rest Nickel und unvermeidbare Verunreinigungen.

Die Verwendung einer solchen Knetlegierung ist vorteilhaft, weil diese eine sehr gute Korrosionsbeständigkeit sowohl bei Raumtemperatur als auch bei erhöhten Temperaturen aufweist.

4

Die als Auflagewerkstoff verwendete Knetlegierung kann vorteilhafterweise zusätzlich noch

max. 1,5 % Titan

max. 1,5 % Niob

max. 5 % Kupfer

max. 0,5 % Aluminium

max. 0,5 % Stickstoff

einzeln oder nebeneinander enthalten.

Die Vorteile des erfindungsgemäßen Verfahrens gegenüber der Herstellung von plattiertem Warmband in einem Planetenwalzwerk sind darin zu sehen,

- daß vorhandene konventionelle Warmbandstraßen benutzt werden können,
- daß durch das Auswalzen von sprengplattiertem Halbzeug die im Zusammenhang mit Doppelpaketen genannten Einschränkungen bezüglich Gesamtumformgrad entfallen, woraus sich Fertigungsmöglichkeiten für ein bezüglich Werkstoffkombination, Banddicke und Bundgewicht breites Erzeugungsprogramm an plattiertem Band ergeben,
- daß infolge der hohen, mit der Bandlänge regulierbaren Walzgeschwindigkeiten bei Warmwalzstraßen die Bandtemperatur gleichmäßig gehalten werden kann,
- daß das Eigenschaftsprofil des Bandmaterials durch eine besondere Kombination von Wärmtemperatur, Umformbedingungen und Abkühlung unmittelbar nach Verlassen des letzten Walzgerüstes eingestellt wird, so daß eine erneute Wärmebehandlung unterbleibt.

Die Vorteile des erfindungsgemäßen Verfahrens gegenüber der Herstellung von plattiertem Grobblech sind darin zu sehen,

- daß das plattierte Warmband für die Weiterverarbeitung auf Kontistraßen geeignet ist, beispielsweise zur Rohrfertigung oder zum Kaltwalzen,
- daß durch Warmbandwalzungen großformatige Plattierungen geringer Dicke mit geringer Toleranz kostengünstig hergestellt werden können, woraus sich auch wirtschaftliche Vorteile für die Weiterverarbeitung ergeben,
- daß Aufkohlungsreaktionen der Auflage gegenüber einer Plattierung konventioneller Walzung und Wärmebehandlung so eingeschränkt werden, daß sie vernachläßigbar sind.

Die Erfindung wird nachfolgend anhand von Ausführungsbeispielen weiter beschrieben und erläutert:

Beispiel 1:

Als Grundwerkstoff für das herzustellende plattierte Warmband diente eine 120 mm dicke Vorbramme aus einem niedriglegierten Feinkornbaustahl, als Auflagewerkstoff ein 40 mm dickes Halbzeug aus einer nichtrostenden austenitischen Stahllegierung (X 1 NiCrMoCu 31 27, Werkstoff-Nr. 1.4563). Die chemische Zusammensetzung der beiden Stähle ist in Tabelle 1 wiedergegeben.

Mit Hilfe des an sich bekannten Sprengplattier-Verfahrens wurde aus dem Grundwerkstoff und dem Auflagewerkstoff ein Verbundkörper hergestellt.

Der Verbundkörper wurde in einem Stoßofen auf 1.250 °C erwärmt und anschließend in einer Warmbandstraße mit einer 20-fachen Umformung zu einem plattierten Warmband mit einer Gesamtdicke von 8 mm gewalzt (6 m Grundwerkstoff, 2 mm Auflagewerkstoff), und zwar in folgenden Schritten:

- Nach einem ersten Glättstich wurde der Verbundkörper in der Vorstaffel der Warmbandstraße mit einer hohen Stichabnahme von phi > 0,10 und mit einer raschen Stichfolge von der Ausgangsdicke von 160 mm auf 35 mm vorgewalzt. Die Temperatur nach der Vorstaffel betrug etwa 1.090 °C.
- Anschließend wurde der Verbundkörper in der Fertigstaffel der Warmbandstraße mit den üblichen Walzparametern zu Warmband ausgewalzt. Die Walzendtemperatur betrug etwa 980 °C.
- Nach dem Austritt aus der Fertigstaffel der Warmbandstraße wurde das plattierte Warmband auf einer Laminarkühlstrecke abgekühlt auf 550 °C; die Abkühlgeschwindigkeit im Kern betrug ca. 20 °C/s.
- Das abgekühlte plattierte Warmband wurde bei ca. 550 °C gehaspelt und der Bund kühlte anschließend an Luft auf Raumtemperatur ab.

Die Untersuchungen des plattierten Warmbandes erstreckten sich auf folgende Gebiete:

1. Plattierungshaftung und Härte

2. Mechanische Eigenschaften (Streckgrenze, Zugfestigkeit, Dehnung, Einschnürung und Kerbschlagarbeit)

3. Lochfraßuntersuchungen und Korrosionsprüfungen zur interkristallinen und flächenbezogenen Korrosion

1. Plattierungshaftung und Härteprüfungen:

Die Prüfungen der Plattierungshaftung erfolgten mit Scher- und und Faltversuchen. Die Prüfergebnisse (Scherfestigkeit und Härte) sind in Tabelle 2 zusammengefaßt. Die Scherwerte liegen im Walzzustand bei über 400 N/mm$^2$ und weisen damit auf eine ausgezeichnete Plattierungshaftung hin.

Bei den Faltversuchen - Zugzone im Grundwerkstoff bzw. Zugzone im Auflagewerkstoff - sind in keinem Fall Ablösungen oder Anrisse bis zu einem Dorndurchmesser D = 2a im Bereich der Bindungszone festgestellt worden.

2. Mechanische Eigenschaften:

Die mechanischen Eigenschaften sind in Tabelle 3 zusammengestellt. Im Walzzustand erfüllt das plattierte Warmband die Anforderungen der Festigkeitsstufe nach API 5L X 65 (Amer. Petrol. Inst., 5L = Rohrstähle, X 65 = 65 Kpsi entsprechen 448 N/mm$^2$ Mindeststreckgrenze) und weist eine sehr gute Zähigkeit auf. Die Kerbschlagarbeit erreicht an 6 mm Proben des Grundwerkstoffes noch bei - 40 °C Werte über 70 J.

3. Lochfraßuntersuchungen und Korrosionsprüfungen

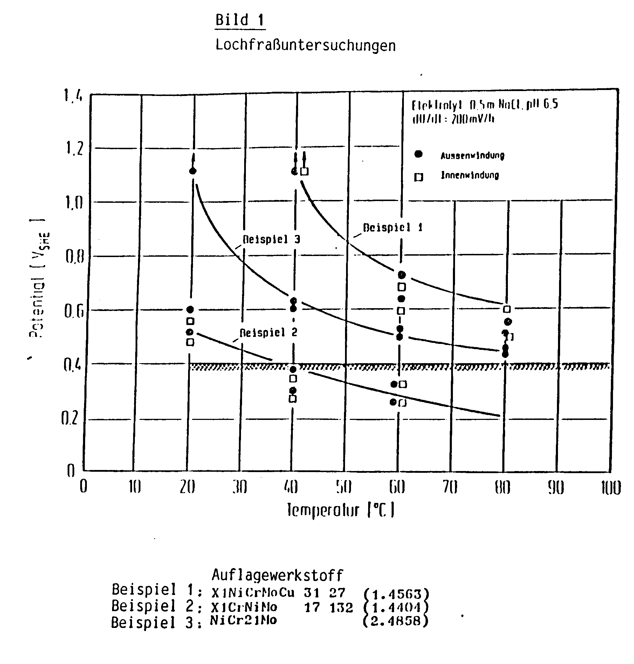

Die Prüfungen erfolgten sowohl nach Abbeizen der Walzhaut als auch einem Abschliff der Walzhaut. Die Korrosionsuntersuchungen wurden im Streicher-Test nach Stahleisen-Prüfblatt 1877 und im Huey-Test nach Stahleisen-Prüfblatt 1870 durchgeführt. Die Ergebnisse der Lochfraßuntersuchungen sind in Bild 1 dargestellt worden. Der Auflagewerkstoff zeigt bei Proben der Außen- und Innenwindung sowohl im gebeizten als auch im geschliffenen Zustand mit Vollmaterial vergleichbare Lochfraßpotentiale auf. Im Streicher- und Huey-Test sind die gleichen positiven Ergebnisse erzielt worden.

Beispiel 2:

Als Grundwerkstoff für das herzustellende plattierte Warmband diente eine Vorbramme der gleichen Stahlsorte und Abmessung wie im Beispiel 1. Als Auflagewerkstoff wurde ein 40 mm dickes Grobblech einer austenitischen Stahllegierung (X 2 CrNiMo 17 13 2, Werkstoff-Nr. 1.4404) eingesetzt. Die chemische Zusammensetzung ist in Tabelle 1 angegeben. Das Sprengen des Verbundwerkstoffes, das Wärmen, das Auswalzen, Kühlen und die Untersuchungen der Eigenschaften im Walzzustand wurden in Anlehnung an Beispiel 1 durchgeführt.

Die Ergebnisse der Scherfestigkeit und Härteprüfungen sind in Tabelle 2 und die mechanisch-technologischen Eigenschaften in Tabelle 3 zusammengestellt. Es wird deutlich, daß unter gleichen Herstellungsbedingungen widerholbares Eigenschaftsprofil der Festigkeitsstufe nach API 5L X 65 erreicht wurde.

Die Ergebnisse der Lochfraßprüfungen sind in Bild 1 dargestellt. Im Streicher- und Huey-Test wurden mit Vollmaterial vergleichbare flächenbezogene Massenverlustraten bestimmt.

Beispiel 3:

Als Grundwerkstoff für das herzustellende plattierte Warmband diente eine 145 mm Vorbramme aus einem Feinkornbaustahl, als Auflagewerkstoff ein 36 mm dickes Walzblech aus einer Nickel-Basislegierung (NiCr 21 Mo, DIN-Werkstoffnr. 2.4858). Die chemische Zusammensetzung der beiden Legierungen ist in Tabelle 1 angegeben.

Gefertigt wurde ein Warmband mit der Enddicke (8 + 2) mm. Das Sprengplattieren, das Wärmen, das Auswalzen, das Kühlen und die Untersuchungen der Eigenschaften im Walzzustand erfolgten in Anlehnung an die vorgenannten Beispiele.

Die Ergebnisse der mechanisch-technologischen Prüfungen sind in den Tabellen 2 und 3 wiedergegeben. Erreicht wurden Festigkeits- und Zähigkeitseigenschaften, die der Leistungsrohrgüte API 5L X 70 entsprechen. Die Korrosionsprüfungen, deren Ergebnis in Bild 1 vorgestellt werden, zeigen ein dem Auflagewerkstoff entsprechendes Eigenschaftsprofil.

Die Ergebnisse zeigen, daß das nach dem erfindungsgemäßen Verfahren erzeugte plattierte Warmband zur Herstellung von Rohren und für andere Anwendungsfälle, in denen plattierte Bänder in dünnen Abmessungsbereichen zur Verarbeitung gelangen, eingesetzt werden kann.

## Tabelle 1

Chemische Zusammensetzung

| | Beispiel | Chemische Zusammensetzung in Massen % | | | | | | | | | | | | |
|---|---|---|---|---|---|---|---|---|---|---|---|---|---|---|
| | | C | Si | Mn | P | S | Al | Cu | Cr | Ni | Nb | N | Mo | Ti |
| Auflagewerkstoff | 1 | .009 | .43 | 1.49 | .016 | .003 | .021 | | 17.01 | 11.13 | | | 2.16 | |
| | 2 | .009 | .02 | 1.52 | .014 | .003 | | 1.23 | 26.7 | 31.2 | | | 3.36 | |
| | 3 | .007 | .34 | .80 | .013 | .005 | .08 | 2.00 | 20.65 | 39.75 | | | 3.05 | .78 |
| Grundwerkstoff | 1 u. 2 | .058 | .42 | .83 | .016 | .001 | .034 | .015 | .029 | .023 | .026 | .0058 | | .018 |
| | 3 | .06 | .32 | .87 | .012 | .005 | .034 | .30 | | .25 | .020 | .007 | | .035 |

EP 0 320 773 B1

## Tabelle 2

Plattierungshaftung und Härteprüfung

| Beispiel | Position | | Scherfestigkeit $\tau_S$ N/mm² | Härte HV 10 | |
|---|---|---|---|---|---|
| | | | | AW | GW |
| 1 | Außen-windung | Rand | 440/444 | 260 | 173 |
| | Innen-windung | Rand | 443/447 | 294 | 170 |
| 2 | Außen-windung | Rand | 453/465 | 233 | 174 |
| | Innen-windung | Rand | 451/451 | 236 | 177 |
| 3 | Außen-windung | Rand | 307/366 | 215 | 174 |

EP 0 320 773 B1

Tabelle 3
Mechanisch-technologische Eigenschaften

| Beispiel | Position | API-Probe mit Auflage | | | | Kerbschlagarbeit $A_V$ (ISO-V) J Prüfquerschnitt 0,40 cm² | | | |
| --- | --- | --- | --- | --- | --- | --- | --- | --- | --- |
| | | Streckgrenze $R_{p0.2}$ N/mm² qu | Zugfestigkeit $R_m$ N/mm² qu | Dehnung $A_2''$ % qu | Einschnürung Z % qu | + 20 °C längs | quer | − 40 °C längs | quer |
| 1 | Außen-windung Rand | 473 | 594 | 34 | 69 | 101/103 | 74/81 | 102/110 | 71/85 |
| | Innen-windung Rand | 487 | 615 | 33.5 | 63 | 92/92 | 87/89 | 90/105 | 80/89 |
| 2 | Außen-windung Rand | 465 | 576 | 38 | 66 | 88/90 | 82/85 | 86/110 | 70/77 |
| | Innen-windung Rand | 467 | 577 | 36 | 69 | 90/92 | 84/87 | 83/97 | 61/79 |
| | Mitte | 468 | 582 | 37 | 66 | 85/94 | 80/90 | 71/72 | 58/70 |
| 3 | Außen-windung Rand | 496 | 634 | 32 | 60 | 60/77 | 64 | 68 | 52 |

## Patentansprüche

1.  Verfahren zur Herstellung von plattiertem Warmband, bei dem zunächst eine aus einem Grundwerkstoff bestehende Stahlbramme und eine aus einem korrosionsbeständigen Auflagewerkstoff bestehende Auflage durch ein Sprengplattieren miteinander verbunden worden, wobei der Auflagewerkstoff ein nichtrostender, insbesondere nichtrostender austenitischer, Stahl oder eine Knetlegierung auf Nickelbasis ist, anschließend der so erzeugte Verbundkörper nach dem Erhitzen auf Warmwalztemperatur warmgewalzt, das auf die Warmband-Enddicke fertiggewalzte plattierte Warmband rasch abgekühlt und schließlich gehaspelt wird,

**dadurch gekennzeichnet,** daß
- der Grundwerkstoff einen Kohlenstoffgehalt besitzt, der in dem Bereich von 0,02 bis 0,25 Gew.-% liegt,
- der erzeugte und auf die Warmwalztemperatur erhitzte Verbundkörper mit einer Stichabnahme von phi > 0,10 bis auf $\frac{1}{4}$ seiner Ausgangsdicke vorgewalzt und
- anschließend mit einer Warmwalz-Endtemperatur im Bereich über 900°C, vorzugsweise in dem Bereich von 950 bis 1.100°C, fertiggewalzt wird,
- das fertiggewalzte plattierte Warmband von der Warmwalz-Endtemperatur mit einer Abkühlgeschwindigkeit im Kern von ≧ 8°C/sec zunächst beschleunigt auf eine Temperatur von weniger als 650°C und
- das im Anschluß daran gehaspelte fertiggewalzte plattierte Warmband weiter auf Raumtemperatur abgekühlt wird.

2. Verfahren nach Anspruch 1,
**dadurch gekennzeichnet,** daß der zunächst durch das Sprengplattieren erzeugte Verbundkörper vor dem Warmwalzen auf eine Warmwalztemperatur in dem Bereich von 1.200 bis 1.280°C erhitzt und bei dieser Temperatur durcherwärmt wird.

3. Verfahren nach Anspruch 1 oder 2,
**dadurch gekennzeichnet,** daß die Abkühlung des fertiggewalzten plattierten Warmbandes nach dem Austritt aus der Fertigstaffel der Warmbandstraße mit flüssigen und/oder gasförmigen Kühlmedien, wie Wasser- bzw. Wasser-Luft-Gemischen, mit einer Abkühlgeschwindigkeit im Kern von 10 bis 55°C/sec erfolgt.

4. Verfahren nach einem der Ansprüche 1 bis 3,
**dadurch gekennzeichnet,** daß die Abkühlung des fertiggewalzten plattierten Warmbandes bis auf eine Abkühltemperatur erfolgt, die in dem Bereich von 650 bis 500°C liegt.

5. Verfahren nach Anspruch 1 bis 4, dadurch gekennzeichnet, daß bei Verwendung einer Warmwalzstraße mit reversierendem Vorgerüst im wesentlichen ohne Haltezeiten zwischen den Reversierschritten gewalzt wird.

6. Verfahren nach Anspruch 1 bis 5, dadurch gekennzeichnet, daß als Grundwerkstoff ein Stahl verwendet wird mit
0,02 - 0,25 % Kohlenstoff
bis 2,5 % Mangan
0,01 - 0,06 % Aluminium
bis 0,8 % Silizium
Rest Eisen und unvermeidbare Verunreinigungen.

7. Verfahren nach Anspruch 1 bis 6, dadurch gekennzeichnet, daß der als Grundwerkstoff verwendete Stahl zusätzlich noch
bis 0,1 % Niob
bis 0,25 % Titan
bis 0,7 % Molybdän
bis 1,0 % Chrom
bis 1,0 % Nickel
bis 0,5 % Kupfer
bis 0,15 % Vanadium
einzeln oder nebeneinander enthält.

8. Verfahren nach Anspruch 1 bis 7, dadurch gekennzeichnet, daß als Auflagewerkstoff ein austenitischer nichtrostender Stahl verwendet wird mit
max. 0,1 % Kohlenstoff

max. 4 % Mangan
max. 4 % Silizium
max. 35 % Nickel
10 - 30 % Chrom
max. 7 % Molybdän
Rest Eisen und unvermeidbare Verunreinigungen.

9.  Verfahren nach Anspruch 1 bis 8, dadurch gekennzeichnet, daß der als Auflagewerkstoff verwendete austenitische nichtrostende Stahl zusätzlich noch
    max. 1,5 % Titan
    max. 1,5 % Niob
    max. 5 % Kupfer
    max. 0,5 % Aluminium
    max. 0,5 % Stickstoff
    einzeln oder nebeneinander enthält.

10. Verfahren nach Anspruch 1 bis 9, dadurch gekennzeichnet, daß als Auflagewerkstoff eine Knetlegierung auf Nickel-Basis verwendet wird mit
    max. 0,1 % Kohlenstoff
    max. 4 % Mangan
    max. 4 % Silizium
    max. 45 % Eisen
    10 - 30 % Chrom
    max. 10 % Molybdän
    Rest Nickel und unvermeidbare Verunreinigungen.

11. Verfahren nach Anspruch 10, dadurch gekennzeichnet, daß die als Auflagewerkstoff verwendete Knetlegierung zusätzlich noch
    max. 1,5 % Titan
    max. 1,5 % Niob
    max. 5 % Kupfer
    max. 0,5 % Aluminium
    max. 0,5 % Stickstoff
    einzeln oder nebeneinander enthält.

## Claims

1.  A process for the production of hot rolled clad steel strip, wherein first a steel slab consisting of a base material and a cladding consisting of a corrosion-resistant cladding material are connected to one another by explosive cladding, the cladding material being a stainless, more particularly a stainless austenitic steel or a nickel-based forgeable alloy, whereafter the resulting composite member is hot rolled after heating to hot rolling temperature, and the clad hot strip, finish rolled to hot strip final thickness, is rapidly cooled and finally coiled, characterized in that
    -   the base material has a carbon content in the range of 0.02 to 0.25% by weight,
    -   the produced composite member, heated to the hot rolling temperature, is roughed down with a reduction per pass of phi > 0.10 to 1/4 of its initial thickness, and
    -   then finish rolled with a hot rolling final temperature in the range above 900 ° C, preferably in the range of 950 to 1100 ° C,
    -   the finish-rolled clad hot strip is first acceleratedly cool from the hot rolling final temperature at a cooling speed in the core of ≧ 8 ° C/sec to a temperature lower than 650 ° C, and
    -   the then coiled finish-rolled clad hot strip is further cooled to room temperature.

2.  A process according to claim 1, characterized in that the composite member first produced by explosive cladding is prior to roughing down heated to a hot rolling temperature in the range of 1200 to 1280 ° C and thoroughly heated at that temperature.

3.  A process according to claims 1 or 2, characterized in that following exit from the finishing step of the hot strip train, the finish-rolled clad hot strip is cooled with liquid and/or gaseous coolants, such as

11

water or mixtures of water and air, at a cooling speed in the core of 10 to 55°C/sec.

4. A process according to one of claims 1 to 3, characterized in that the finish-rolled clad hot strip is cooled to a cooling temperature lying in the range of 650 to 500°C.

5. A process according to one of claims 1 to 4, characterized in that if a hot rolling train having a reversing roughing stand is used, rolling is performed substantially without holding times between the reversing steps.

6. A process according to one of claims 1 to 5, characterized in that the base material used is a steel having
0.02 to 0.25 % carbon
up to 2.5 % manganese
0.01 to 0.06 % aluminium
up to 0.8 % silicon
residue iron and unavoidable impurities.

7. A process according to one of claims 1 to 6, characterized in that the steel used as the base material also contains separately or in combination
up to 0.1 % niobium
up to 0.25 % titanium
up to 0.7 % molybdenum
up to 1.0 % chromium
up to 1.0 % nickel
up to 0.5 % copper
up to 0.15 % vanadium.

8. A process according to one of claims 1 to 7, characterized in that the cladding material used is an austenitic stainless steel having
max. 0.1 % carbon
max. 4 % manganese
max. 4 % silicon
max. 35 % nickel
10 - 30 % chromium
max. 7 % molybdenum
residue iron and unavoidable impurities.

9. A process according to one of claims 1 to 8, characterized in that the austenitic stainless steel used as the cladding material also contains separately or in combination
max. 1.5 % titanium
max. 1.5 % niobium
max. 5 % copper
max. 0.5 % aluminium
max. 0.5 % nitrogen

10. A process according to one of claims 1 to 9, characterized in that the cladding material used is a nickel-based forgeable alloy having
max. 0.1 % carbon
max. 4 % manganese
max. 4 % silicon
max. 45 % iron
10 - 30 % chromium
max. 10 % molybdenum
residue nickel and unavoidable impurities.

11. A process according to claim 10, characterized in that the forgeable alloy used as the cladding material also contains separately or in combination
max. 1.5 % titanium

12

max. 1.5 % niobium
max. 5 % copper
max. 0.5 % aluminium
max. 0.5 % nitrogen.

**Revendications**

1. Procédé pour la fabrication de tôles plaquées laminées à chaud, dans lequel une brame d'acier constituée d'un matériau de base et d'un recouvrement constitué d'un matériau de recouvrement résistant à la corrosion, sont liés l'un à l'autre par placage par explosion, lequel matériau de recouvrement est un alliée d'acier inoxydable, notamment un acier austénitique inoxydable, ou un alliage de moulage à base de nickel, procédé dans lequel, ensuite, le composite ainsi fabriqué est laminé à chaud après avoir été chauffé à la température de laminage à chaud, puis la tôle laminée à chaud jusqu'à atteindre l'épaisseur finale de la tôle laminée est refroidie, et enfin dévidée, procédé caractérisé en ce que :
   - le matériau de base possède une teneur en carbone comprise dans l'intervalle entre 0,02 et 0,25 % en poids,
   - le composite fabriqué et porté à la température de laminage à chaud est pré-laminé avec une réduction par passe, phi, supérieure à 0,10, jusqu'à $\frac{1}{4}$ de son épaisseur initiale et
   - ensuite, est laminé à une température finale de laminage à chaud dans un domaine au-dessus de 900°C, de préférence dans le domaine entre 950 et 1100°C,
   - la tôle plaquée laminée à chaud, brute de laminage, est d'abord refroidie rapidement depuis la température finale de laminage à chaud, avec une vitesse de refroidissement à coeur supérieure ou égale à 8°C/s, jusqu'à une température inférieure à 650°C,
   - ensuite, la tôle plaquée laminée à chaud, brute de laminage et dévidée, est refroidie jusqu'à la température ambiante.

2. Procédé selon la revendication 1, caractérisé en ce que le composite d'abord fabriqué par placage par explosion est porté à une température de 1200 à 1280°C, avant le laminage à chaud, et est maintenu à cette température pour atteindre une répartition homogène de la température dans ce composite.

3. Procédé selon la revendication 1 ou 2, caractérisé en ce que le refroidissement de la tôle plaquée à la fin du laminage à chaud, à la sortie du finisseur du laminoir, est obtenu à l'aide de moyens de refroidissement liquides ou gazeux, comme de l'eau ou des mélanges d'eau et d'air, avec une vitesse de refroidissement à coeur comprise entre 10 et 55°C/s.

4. Procédé selon l'une quelconque des revendications 1 à 3, caractérisé en ce que le refroidissement de la tôle plaquée laminée à chaud, terminée, est conduit jusqu'à une température comprise dans l'intervalle entre 650 et 500°C.

5. Procédé selon l'une quelconque des revendications 1 à 4, caractérisé en ce que, dans le cas où l'on utilise un laminoir avec châssis avant le retournement, le laminage se fait pour l'essentiel sans temps de pause entre les diverses étapes de retournement.

6. Procédé selon l'une quelconque des revendications 1 à 5, caractérisé en ce que l'acier utilisé comme matériau de base contient :
   0,02 - 0,25 % de carbone
   jusqu'à 2,5 % de manganèse
   jusqu'à 0,06 % d'aluminium
   jusqu'à 0,8 % de silicium
   le reste en fer, et en inévitables impuretés.

7. Procédé selon l'une quelconque des revendications 1 à 6, caractérisé en ce que l'acier utilisé comme matériau de base contient en plus, séparément ou ensemble :
   jusqu'à 0,1 % de niobium
   jusqu'à 0,25 % de titane
   jusqu'à 0,7 % de molybdène
   jusqu'à 1,0 % de chrome

jusqu'à 1,0 % de nickel
jusqu'à 0,5 % de cuivre
jusqu'à 0,15 % de vanadium

8. Procédé selon l'une quelconque des revendications 1 à 7, caractérisé en ce que le matériau de recouvrement utilisé est un acier austénitique inoxydable, contenant :
au maximum 0,1 % de carbone
au maximum 4 % de manganèse
au maximum 4 % de silicium
au maximum 35 % de nickel
10-30 % de chrome
au maximum 7 % de molybdène
le reste en fer, et en inévitables impuretés.

9. Procédé selon l'une quelconque des revendications 1 à 8, caractérisé en ce que l'acier austénitique inoxydable utilisé comme matériau de recouvrement contient de plus, séparément ou ensemble :
au maximum 1,5 % de titane
au maximum 1,5 % de niobium
au maximum 5 % de cuivre
au maximum 0,5 % d'aluminium
au maximum 0,5 % d'azote

10. Procédé selon l'une quelconque des revendications 1 à 9, caractérisé en ce que le matériau de recouvrement utilisé est un alliage de moulage à base de nickel, contenant :
au maximum 0,1 % de carbone
au maximum 4 % de manganèse
au maximum 4 % de silicium
au maximum 45 % de fer
de 10 à 30 % de chrome
au maximum 10 % de molybdène
le reste en nickel et en impuretés inévitables.

11. Procédé selon l'une quelconque des revendications 1 à 10, caractérisé en ce que l'alliage de moulage à base de nickel utilisé comme matériau de recouvrement contient de plus, séparément ou ensemble :
au maximum 1,5 % de titane
au maximum 1,5 % de niobium
au maximum 5 % de cuivre
au maximum 0,5 % d'aluminium
au maximum 0,5 % d'azote.

## Bild 1

Lochfraßuntersuchungen

Auflagewerkstoff
Beispiel 1: X1NiCrMoCu 31 27 (1.4563)
Beispiel 2: X1CrNiMo 17 132 (1.4404)
Beispiel 3: NiCr21Mo (2.4858)

EP 0 320 773 B1